# EUROPÄISCHE PATENTSCHRIFT

(11) **EP 1 430 211 B1**
(45) Veröffentlichungstag und Bekanntmachung des Hinweises auf die Patenterteilung: **19.09.2007**
(21) Anmeldenummer: 02781085.2
(22) Anmeldetag: 30.07.2002
(51) Int. Cl.: F02F 3/12, F02F 3/04, B21K 1/18

(54) **VERFAHREN ZUR HERSTELLUNG EINES KOLBENS ODER KOLBENBODENS FÜR EINEN VERBRENNUNGSMOTOR**
METHOD FOR PRODUCING A PISTON OR PISTON HEAD FOR AN INTERNAL COMBUSTION ENGINE
PROCEDE POUR PRODUIRE UN PISTON OU UNE TETE DE PISTON POUR UN MOTEUR A COMBUSTION INTERNE

(30) Priorität: 19.09.2001 DE 10146079
(43) Veröffentlichungstag der Anmeldung: 23.06.2004
(73) Patentinhaber: MAHLE GMBH, D-70376 Stuttgart (DE)
(72) Erfinder: ISSLER, Wolfgang, 71409 Schwaikheim (DE)
(74) Vertreter: Pohle, Reinhard
(86) Internationale Anmeldenummer: PCT/DE2002/002768
(87) Internationale Veröffentlichungsnummer: WO 2003/025376

(56) Entgegenhaltungen:
- DE-A- 19 901 770
- DE-C- 816 780
- GB-A- 1 508 611
- US-A- 4 581 983

## Beschreibung

Die Erfindung betrifft ein Verfahren zur Herstellung eines Kolbens oder Kolbenbodens für einen Verbrennungsmotor gemäß dem Oberbegriff des Patentanspruchs 1.

Es ist an sich bekannt, dass nach einem Motorlauf an Stahlkolben mit Verbrennungsmulden oder aus Stahl bestehende Kolbenböden in Abhängigkeit von der im Lauf erreichten Betriebstemperatur am Muldenrand teilweise Verzunderung feststellbar ist. Diese Verzunderung kann zur Anrissbildung und damit zum Ausfall des Bauteils führen. Bekannte Lösungen zur Verbesserung dieser Situation sind beispielsweise das Beschichten des fertigen Kolbens im Muldenrandbereich mit einer zunderbeständigen Schicht mittels Plasmaspritzen, wie in dem SAE-Papier 860888 "In-Service Performance of Ceramic and Metallic Coatings in Diesel Engines" oder der Deutschen Patentanmeldung, Aktenzeichen 100 29 810.9, beschrieben. Ebenso ist das Auftragsschweißen von zunderbeständigeren Werkstoffen am vorbearbeiteten Kolben oder Verfahren wie das Reibschweißen eines zunderbeständigeren Werkstoffs am Muldenrand bekannt.

Durch die DE 199 01 770 A1 ist weiterhin ein Herstellungsverfahren für einen Kolben eines Verbrennungsmotors offenbart, bei dem ein bereitgestellter, d.h. fertig spanabhebend bearbeiteter Kolben eine im Bodenbereich eingebrachte umlaufend ringförmige Vertiefung aufweist, in der anschließend Kupfer/Aluminiumdrahtstäbe eingelegt und aufgeschmolzen werden, sodass die ringförmige Vertiefung eine Al/Cu-Schichtstruktur aufweist. Durch eine maschinelle spanende Endbearbeitung, die im wesentlichen nur im ringförmigen umlaufenden Bereich durchgeführt wird, erfolgt die Fertigstellung des Kolbens.

Der Nachteil der genannten Verfahren besteht darin, dass von einem bereits fertig bearbeiteten Kolben ausgegangen wird, bei dem anschließend mittels vorgenannt beschriebener Verfahren zunderbeständige Materialien im Bodenbereich oder Muldenrand des Kolbens eingebracht und anschließend der Kolben endbearbeitet werden muss. Alle diese Lösungen unterbrechen den Vorgang einer spanabhebenden Bearbeitung und benötigen außerdem eine Wärmebehandlung zum Abbau der Eigenspannungen, die zwischen dem Kolben und zunderbeständigen Material auftreten.

Der Erfindung liegt daher die Aufgabe zugrunde, ein gegenüber dem Stand der Technik vereinfachtes und kostengünstiges Herstellungsverfahren für einen Kolben mit verringerter Verzunderungsneigung am Muldenrand anzugeben.

Erfindungsgemäß gelöst wird die Aufgabe gemäß der kennzeichnenden Merkmale der Ansprüche 1 und 8. Vorteilhafte Weiterbildungen sind Gegenstand der Unteransprüche.

Dadurch, dass die Herstellung eines geschmiedeten Stahl-Kolbens bzw. Stahloberteils aus einem zylindrisch geformten Stahl-Stangenabschnitt erfolgt, der mindestens eine zur Längsachse des Stangenabschnitts rechtwinklig ausgebildete ebene Stirnfläche aufweist, ist in einfacher Weise eine ringförmig umlaufende Ausnehmung in einem Bereich der Stimfläche einformbar, in welchem später der Muldenrand der Verbrennungsmulde entsteht. Die für das nachfolgende herkömmliche Schmieden erforderliche Vorwärmung bewirkt, dass die Eigenspannung zwischen dem Stahl-Kolbenmaterial und dem zunderbeständigen Material so abgebaut wird, dass keine zusätzliche Wärmebehandlung erforderlich ist. Üblicherweise betragen die Temperaturen dafür ca. 850 - 900 °C.

Zwar verformt sich die Ausnehmung, in der zunderbeständiges Material vor dem Schmieden eingeschweißt wird, während des Schmiedens, aber es kommt nach dem Schmieden im wesentlichen am Muldenrand der Verbrennungsmulde zu liegen, sodass eine Fertigstellung des Kolbens oder Kolbenbodens ohne Unterbrechung der nachfolgenden spanenden Bearbeitung durchführbar ist.

In einer weiteren vorteilhaften Ausführungsform des Herstellungsverfahrens kann ein Kolben oder Kolbenboden dadurch hergestellt werden, indem auf die ebene Stimfläche kreisringförmig im Bereich des späteren Muldenrandes das zunderbeständige Material in einer Menge aufgeschweißt wird, die nach dem Schmieden und Endbearbeiten eine Ausbildung eines zunderbeständigen Muldenrands ermöglicht.

Die Erfindung wird im folgenden anhand eines Ausführungsbeispiels näher erläutert. Es zeigt:
- Fig. 1: schematisch den Ablauf des erfindungsgemäßen Herstellungsverfahrens in den Schritten A bis D in einer ersten Ausführungsform,
- Fig. 2: schematisch den Ablauf des erfindungsgemäßen Herstellungsverfahrens in den Schritten B bis D in einer zweiten Ausführungsform,
- Fig. 3: schematisch den Ablauf des erfindungsgemäßen Herstellungsverfahrens in den Schritten E bis G in einer weiteren Ausführungsform.

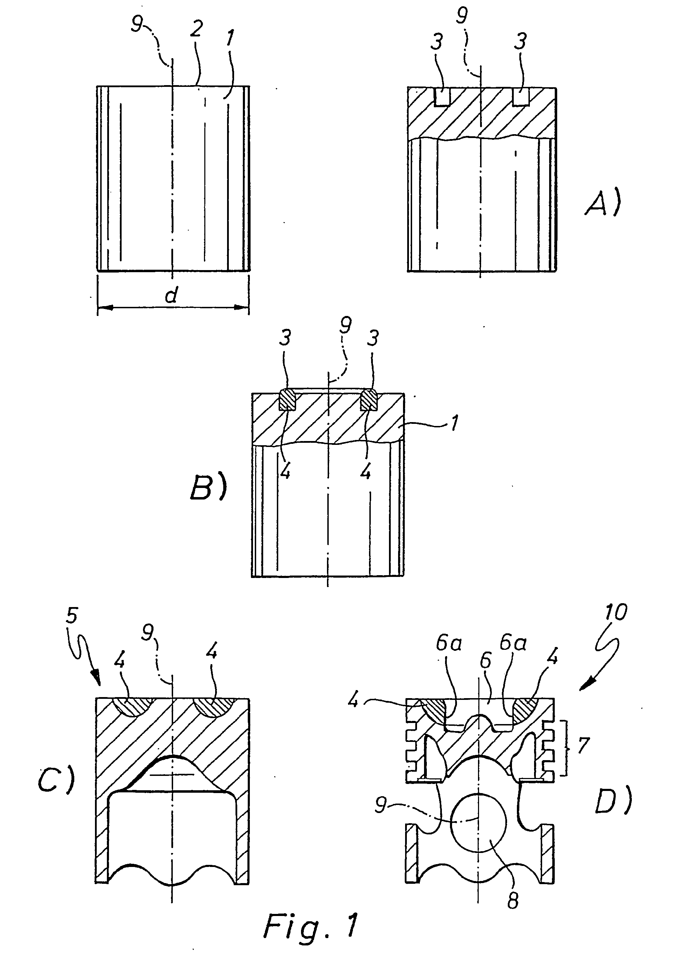

In der Fig.1 weist ein mit 1 bezeichneter zylindrischer Stangenabschnitt aus Stahl, nachfolgend als Rohteil 1 bezeichnet, das bevorzugt aus einem Werkstoff 42CrMo4 oder 38MnSi6 besteht, eine zur Längsachse 9 rechtwinklig ausgebildete Stirnfläche 2 auf, die beispielsweise durch einen Dreharbeitsgang hergestellt wird. In die Stirnfläche wird ebenfalls mittels Drehen eine umlaufende ringförmige Ausnehmung 3 in einem Bereich der Stimfläche 2 eingebracht (Herstellungsschritt A), die später einen Muldenrand 6a einer Verbrennungsmulde 6 im Kolben 10 bzw. Kolbenboden bildet. Abhängig vom herzustellenden Kolbentyp und Kolbengröße kann dieser Bereich 30 bis 90 Prozent des Durchmessers d des Rohteils 1 bzw. späteren Kolbennenndurchmessers betragen, wobei die Tiefe der Ausnehmung 3 in Abhängigkeit vom herzustellenden Kolbentyp beispielsweise 5-15% des Kolbennenndurchmessers betragen kann.

Im Verfahrensschritt B) erfolgt mittels eines Schweißverfahrens, beispielsweise CO₂-Schweißen, Laser- oder Elektronenstrahlschweißen, Reibschweißen, Sprengplattieren oder anderer bekannter Verbindungsverfahren das Einschweißen eines zunderbeständigen Materials 4, nachfolgend als Zusatzmaterial bezeichnet, das bei einer Belastungstemperatur im Verbrennungsmotor von über 450° C keine oder nur geringe Neigung zur Bildung einer Zunderschicht aufweist. Bevorzugt können dafür Werkstoffe auf Nickelbasis oder Ventilstahl X45CrSi9 verwendet werden. Die Ausnehmung 3 ist nach der Durchführung des Schweißens komplett mit zunderbeständigem Material 4 ausgefüllt und kann sogar über die Stirnfläche 2 reichen.

Durch an sich bekannte Schmiedeverfahren wird die Umformung des Stangenabschnitts 1 zu einem Kolbenrohling 5 realisiert, wie im Verfahrensschritt C) der Fig. 1 dargestellt. Durch das Schmieden wird das zunderbeständige Material 4 derart verformt, dass zumindest im Bereich des entstehenden Muldenrandes 6a auf dem gesamten Umfang oder auf einem Teil des Umfangs das zunderbeständige Material zu liegen kommt, wobei aber auch ein lokales Fließen des Materials 4 infolge des Schmiedens in den Bereich des Muldenbodens hinein nicht auszuschließen ist. Anschließend erfolgt durch eine spanende Bearbeitung die Fertigstellung des Kolbenrohlings zu einem in einen Verbrennungsmotor einsetzbaren Kolben 10 mit gewünschter Verbrennungsmulde 6, Ringpartie 7, Bolzennabe 8, etc..

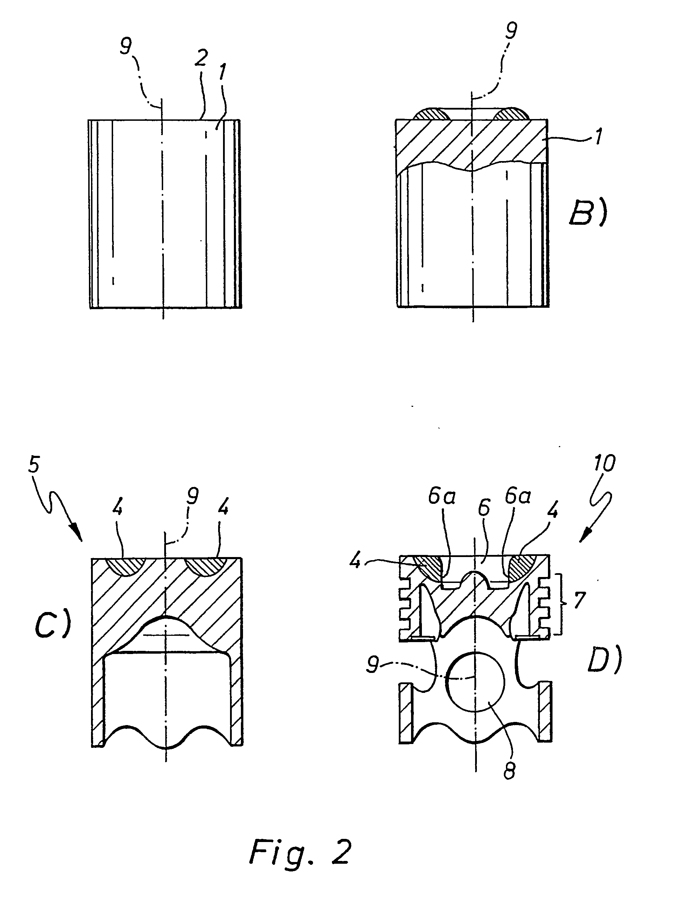

In einer zweiten Ausführungsform des Herstellungsverfahrens gemäß Fig. 2 ist ein Kolben oder Kolbenboden dadurch herstellbar, dass der Verfahrensschritt B) und damit das Einbringen einer Ausnehmung 3 in die Stirnfläche 2 entfällt. Stattdessen erfolgt ein Aufbringen einer Schweißschicht aus zunderbeständigem Material 4 in einer Dicke und wenigstens in einem kreisförmigen Bereich auf der Stirnfläche 2, wie vorgenannt in der ersten Ausführungsform beschrieben. Alle anderen Verfahrensschritte werden gemäß den Angaben zum ersten Ausführungsbeispiel, Fig. 1, beibehalten.

In einer weiteren nicht erfindungsgemäßen Ausführungsform kann über die gesamte Stirnfläche 2 eine Schweißschicht aus zunderbeständigem Material 4 aufgebracht werden. Die Schichtdicke der Schicht kann dabei konstant bleiben, bevorzugt steigt diese aber beginnend von der Kolbenachse bzw. Längsachse des Stangenabschnitts 9 radial nach außen bis zum Kolbenrand hin an. Am fertigen maschinell bearbeiteten Kolben bildet somit das Zusatzmaterial 4 einen Teil oder die gesamte Oberfläche des Kolbens zur Brennraumseite (Kolbenboden) sowie einen Teil des Feuerstegs bzw. auch der Ringpartie.

Es liegt im Rahmen der Erfindung, dass das Herstellungsverfahren ebenso Kolbenböden für gebaute Kolben umfasst.

Auf dem selben Herstellweg kann sinngemäß ein Bauteil mit lokal unterschiedlichen Festigkeiten hergestellt werden.

### Bezugszeichen

- 1: Rohteil, zylindrischer Stangenabschnitt
- 2: Ebene Stirnfläche
- 3: Ringförmige Ausnehmung
- 4: Zusatzmaterial, zunderbeständig
- 5: Kolbenrohling
- 6: Verbrennungsmulde bzw. Bodenmulde
- 6a: Muldenrandbereich
- 7: Ringpartie
- 8: Bolzennabe
- 9: Längsachse des Stangenabschnitts
- 10: Kolben
- d: Durchmesser des Stangenabschnitts
- A)-D): Verfahrensschritte
- 1): Zylindrischer Stangenabschnitt mit zur Achse rechtwinklig ausgeformter Stirnfläche;
- A): Eindrehen einer ringförmigen Ausnehmung;
- B): Ausfüllen der ringförmigen Ausnehmung mit zunderbeständigem Material und anschließendem Schmelzen;
- C): Schmieden des Kolbenrohlings;
- D): Fertigbearbeitung des Kolbens.

## Patentansprüche

1. Verfahren zur Herstellung eines Kolbens (10) oder Kolbenbodens für einen Verbrennungsmotor mit einer am Kolbenboden vorgesehenen Verbrennungsmulde (6), bei dem der Kolben (10) aus einem zylindrischen Rohteil (1) aus Stahl geformt wird, wobei das zylindrische Rohteil (1) mindestens eine ebene Stirnfläche (2) aufweist, die rechtwinklig zur Längsachse (9) des Rohteils (1) ausgebildet ist, **gekennzeichnet durch** die Schritte:
A) Ausbilden einer ringförmig umlaufenden Ausnehmung (3) in der Stimfläche (2);
B) Aufbringen von Zusatzmaterial (4) in die Ausnehmung (3) mittels einer mindestens teilweise kraftschlüssigen Verbindung des Zusatzmaterials (4) mit dem Stahl des Rohteils (1);
C) Schmieden des nach den Schritten A) und B) gebildeten Rohteils (1) zu einem Kolbenrohling (5);
D) Maschinelles Bearbeiten des Kolbenrohlings (5) zum einbaufertigen Kolben (10) in den Verbrennungsmotor.

2. Verfahren nach Anspruch 1, **dadurch gekennzeichnet, dass** die ringförmige Ausnehmung (3) so positioniert in einem Bereich der Stirnfläche (2) eingebracht wird, dass sie am einbaufertigen Kolben (10) im Randbereich (6a) der Verbrennungsmulde (6) liegt.

3. Verfahren nach den Ansprüchen 1 und 2, **dadurch gekennzeichnet, dass** das Zusatzmaterial (4) durch Schweißen aufgebracht wird, wobei die ringförmige Ausnehmung (3) vollständig mit Zusatzmaterial (4) ausgefüllt ist.

4. Verfahren nach Anspruch 3, **dadurch gekennzeichnet, dass** das Schweißen durch CO₂-, Laser- oder Elektronenstrahlschweißen, Reibschweißen, Sprengplattieren, erfolgt.

5. Verfahren nach Anspruch 1 bis 4, **dadurch gekennzeichnet, dass** das zylindrische Rohteil (1) aus einem 42CrMo4 oder 38MnSi6 Werkstoff oder AFP-Stahl und das Zusatzmaterial aus einem Werkstoff gebildet ist, das bei Temperaturen über 450 °C keine oder nur geringe Neigung zur Bildung einer Zunderschicht aufweist.

6. Verfahren nach Anspruch 5, **dadurch gekennzeichnet, dass** das Zusatzmaterial ein zunderbeständiges Material wie Ventilstahl X45CrSi9 oder ein Werkstoff auf Nickelbasis ist.

7. Verfahren nach einem oder mehreren der Ansprüche 1 bis 6, **dadurch gekennzeichnet, dass** der Randbereich der Verbrennungsmulde (6a) nicht über den ganzen Umfang der Verbrennungsmulde (6) aus dem Zusatzmaterial (4) gebildet wird.

8. Verfahren zur Herstellung eines Kolbens (10) oder Kolbenbodens für einen Verbrennungsmotor mit einer am Kolbenboden vorgesehenen Verbrennungsmulde (6), bei dem der Kolben (10) aus einem zylindrischen Rohteil (1) aus Stahl geformt wird, wobei das zylindrische Rohteil (1) mindestens eine ebene Stimfläche (2) aufweist, die rechtwinklig zur Längsachse (9) des Rohteils (1) ausgebildet ist, **gekennzeichnet durch** die Schritte:
A) Aufbringen von Zusatzmaterial (4) mittels einer mindestens teilweise kraftschlüssigen Verbindung des Zusatzmaterials (4) mit dem Stahl des Rohteils (1) wenigstens in einem kreisförmigen Bereich auf der Stirnfläche (2);
B) Schmieden des nach dem Schritt A) gebildeten Rohteils (1) zu einem Kolbenrohling (5);
C) Maschinelles Bearbeiten des Kolbenrohlings (5) zum einbaufertigen Kolben (10) in den Verbrennungsmotor.

9. Verfahren nach Anspruch 8, **dadurch gekennzeichnet, dass** das Zusatzmaterial (4) durch Schweißen aufgebracht wird.

10. Verfahren nach Anspruch 9, **dadurch gekennzeichnet, dass** die Schichtdicke des Zusatzmaterials (4) von der Kolbenachse (9) nach radial außen bis zum Kolbenrand ansteigt.

11. Verfahren nach Anspruch 9, **dadurch gekennzeichnet, dass** das Zusatzmaterial (4) am einbaufertigen Kolben (10) die gesamte Oberfläche des Kolbenbodens oder wenigstens einen Teil, insbesondere den Muldenrandbereich (6a), bildet und wenigstens einen Teil des Feuerstegs umfasst.

## Claims

1. Method for the production of a piston (10) or piston head for an internal combustion engine with a combustion bowl (6) provided on the piston head, in which the piston (10) is formed from a cylindrical unfinished part (1) made of steel, wherein the cylindrical unfinished part (1) has at least one flat end face (2) that is at right angles to the longitudinal axis (9) of the unfinished part (1), **characterised by** the steps:
A) forming an annular, circumferential recess (3) in the end face (2);
B) applying additional material (4) into the recess (3) by means of the at least partially force-closed bonding of the additional material (4) with the steel of the unfinished part (1);
C) forging the unfinished part (1) produced according to steps A) and B) to produce a piston blank (5);
D) machining the piston blank (5) to produce a finished piston (10) ready for installation in the internal combustion engine.

2. Method according to claim 1, **characterised in that** the annular recess (3) is formed and positioned in a region of the end face (2) so that on the installation-ready piston (10) it lies in the edge region (6a) of the combustion bowl (6).

3. Method according to claims 1 and 2, **characterised in that** the additional material (4) is applied by means of welding, wherein the annular recess (3) is completely filled with additional material (4).

4. Method according to claim 3, **characterised in that** the welding takes place by means of CO₂ welding, laser welding or electron beam welding, friction welding, explosion plating.

5. Method according to claims 1 to 4, **characterised in that** the cylindrical unfinished part (1) is formed from a 42CrMo4 or 38MnSi6 material or AFP steel, and **in that** the additional material is formed from a material that demonstrates no tendency or only a slight tendency to form a layer of scale at temperatures above 450°C.

6. Method according to claim 5, **characterised in that** the additional material is a scale-resistant material such as valve steel X45CrSi9 or a material with a nickel base.

7. Method according to one or more of the preceding claims, **characterised in that** the edge region of the combustion bowl (6a) is not made from the additional material (4) over the entire circumference of the combustion bowl (6).

8. Method for the production of a piston (10) or piston head for an internal combustion engine with a combustion bowl (6) provided on the piston head, in which the piston (10) is formed from a cylindrical unfinished part (1) made of steel, wherein the cylindrical unfinished part (1) has at least one flat end face (2) that is at right angles to the longitudinal axis (9) of the unfinished part (1), **characterised by** the steps:
A) applying additional material (4) by means of the at least partial force-closed bonding of the additional material (4) with the steel of the unfinished part (1);
B) forging the unfinished part (1) produced according to step A) to produce a piston blank (5);
C) machining the piston blank (5) to produce a finished piston (10) ready for installation in the internal combustion engine.

9. Method according to claim 8, **characterised in that** the additional material (4) is applied by welding.

10. Method according to claim 9, **characterised in that** the layer thickness of the additional material (4) increases from the piston axle (9) radially outwards up to the piston edge.

11. Method according to claim 9, **characterised in that** the additional material (4) on the installation-ready piston (10) forms the entire surface of the piston head or at least one part thereof, in particular the bowl edge area (6a) and comprises at least one part of the fire plate.

## Revendications

1. Procédé de fabrication d'un piston (10) ou d'une tête de piston pour un moteur à combustion interne avec une auge de combustion (6) prévue sur la tête de piston, selon lequel le piston (10) est formé à partir d'une ébauche (1) cylindrique en acier, l'ébauche cylindrique (1) présentant au moins une surface frontale plane (2) formée à angle droit par rapport à l'axe longitudinal (9) de l'ébauche (1), **caractérisé par les étapes :**
A) réalisation d'un creux périphérique annulaire (3) dans la surface frontale (2) ;
B) mise en place de matériau d'apport (4) dans le creux (3) au moins en partie par adhérence du matériau d'apport (4) avec l'acier de l'ébauche (1) ;
C) forgeage de l'ébauche (1), formée suivant les étapes A) et B), en une ébauche de piston (5) ;
D) usinage mécanique de l'ébauche de piston (5) en un piston prêt au montage (10) dans le moteur à combustion interne.

2. Procédé suivant la revendication 1, **caractérisé en ce que** le creux annulaire (3) est mis en place dans une zone de la surface frontale (2) dans une position telle qu'il se situe sur le piston (10) prêt au montage dans la zone de bordure (6a) de l'auge de combustion (6).

3. Procédé suivant l'une des revendications 1 et 2, **caractérisé en ce que** le matériau d'apport (4) est appliqué par soudage, le creux annulaire (3) étant alors totalement rempli de matériau d'apport (4).

4. Procédé suivant la revendication 3, **caractérisé en ce que** le soudage s'effectue par soudage CO₂, laser ou par faisceau d'électrons, par soudage par friction, par plaquage par explosion.

5. Procédé suivant les revendications 1 à 4, **caractérisé en ce que** l'ébauche cylindrique (1) est formée d'un matériau 42CrMo4 ou 38MnSi6 ou d'acier AFP et le matériau d'apport est formé d'un matériau, qui ne présente à des températures de plus de 450°C aucune ou qu'une faible tendance à la formation d'une couche de calamine.

6. Procédé suivant la revendication 5, **caractérisé en ce que** le matériau d'apport est un matériau résistant au calaminage, tel qu'acier à soupape X45CrSi9 ou un matériau à base de nickel.

7. Procédé suivant l'une ou plusieurs des revendications 1 à 6, **caractérisé en ce que** la zone de bordure de l'auge de combustion (6a) n'est pas formée du matériau d'apport (4) sur la totalité du pourtour de l'auge de combustion (6).

8. Procédé de fabrication d'un piston (10) ou d'une tête de piston pour un moteur à combustion interne avec une auge de combustion (6) prévue sur la tête de piston, selon lequel le piston (10) est formé d'une ébauche (1) cylindrique en acier, l'ébauche cylindrique (1) présentant au moins une surface frontale plane (2) formée à angle droit par rapport à l'axe longitudinal (9) de l'ébauche (1), **caractérisé par les étapes :**
A) mise en place de matériau d'apport (4) au moins en partie par adhérence du matériau d'apport (4) avec l'acier de l'ébauche (1) au moins dans une zone circulaire de la surface frontale (2) ;
B) forgeage de l'ébauche (1) formée suivant l'étape A) en une ébauche de piston (5) ;
C) usinage mécanique de l'ébauche de piston (5) en un piston prêt au montage (10) dans le moteur à combustion interne.

9. Procédé suivant la revendication 8, **caractérisé en ce que** le matériau d'apport (4) est appliqué par soudage.

10. Procédé suivant la revendication 9, **caractérisé en ce que** l'épaisseur de couche du matériau d'apport (4) augmente radialement vers l'extérieur à partir de l'axe de piston (9) jusqu'au bord du piston.

11. Procédé suivant la revendication 9, **caractérisé en ce que** le matériau d'apport (4) forme sur le piston (10) prêt au montage la surface totale de la tête de piston ou au moins une partie, en particulier la zone de bordure de l'auge (6a), et entoure au moins une partie du segment de feu.
